(19) Europäisches Patentamt
European Patent Office
Office européen des brevets

(11) EP 2 674 448 A1

(12) **EUROPEAN PATENT APPLICATION**

(43) Date of publication:
**18.12.2013 Bulletin 2013/51**

(21) Application number: **13171396.8**

(22) Date of filing: **11.06.2013**

(51) Int Cl.:
***C08J 5/24*** *(2006.01)*
*C08L 83/04* *(2006.01)*
*C08L 83/14* *(2006.01)*
*C08G 77/50* *(2006.01)*
*C08G 77/20* *(2006.01)*
*C08G 77/12* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.06.2012 KR 20120062916**

(71) Applicant: **CHEIL INDUSTRIES INC.**
**Gumi-si,**
**Gyeongsangbuk-do 730-710 (KR)**

(72) Inventors:
- **Im, Sung Han**
  **Gyeonggi-do (KR)**
- **Kim, Young Kwon**
  **Gyeonggi-do (KR)**
- **Choi, Seok Won**
  **Gyeonggi-do (KR)**
- **Lee, Sang Keol**
  **Gyeonggi-do (KR)**
- **Jeong, Eun Hwan**
  **Gyeonggi-do (KR)**
- **Lee, Woo Jin**
  **Gyeonggi-do (KR)**

(74) Representative: **Michalski, Stefan**
**Michalski Hüttermann & Partner**
**Patentanwälte**
**Speditionstraße 21**
**40221 Düsseldorf (DE)**

(54) **Composite sheet, method for preparing the same and display substrate including the same**

(57) Disclosed herein is a composite sheet including a matrix and a reinforcing material impregnated in the matrix. The composite sheet has a weight variation ($\Delta W$) of 98% or more at 350°C and a relaxation modulus of 1000 MPa or less under a load of 100 $\mu N$. The composite sheet suppresses the formation of a ring structure and thermal decomposition at temperatures of 350°C or more, thereby preventing a failure of the materials at high temperatures in the manufacture of a substrate.

EP 2 674 448 A1

## Description

### Field of the Invention

The present invention relates to a composite sheet, a method for preparing the same, and a display substrate including the same.

### Description of the Related Art

A glass substrate has excellent thermal resistance, transparency and a low coefficient of linear expansion. Therefore, a glass substrate has been widely used as a substrate for liquid crystal display devices, organic EL display devices, color filters, solar cells, etc. However, glass substrates are limited in applicability to thinner and lighter liquid crystal displays due to thickness, weight and vulnerability to impact. Moreover, due to brittleness of glass materials, a glass substrate is not suitable for a display substrate.

Therefore, a display substrate made of a plastic optical film material is attracting attention as an alternative to glass substrates in the art. However, the plastic optical film material has a high coefficient of thermal expansion and is disadvantageous in terms of stiffness. Thus, a method for preparing a transparent substrate having improved stiffness by impregnating a reinforcing material including glass fibers or glass cloths into a polymeric matrix resin is used.

Recently, a method for preparing a transparent substrate having a low coefficient of thermal expansion by impregnating a reinforcing material into a rubbery material has been proposed. Among these materials, linear polyorganosiloxane resins are spotlighted major focus of attention. A transparent substrate made of the linear polyorganosiloxane resin has excellent properties in terms of transparency, flexibility and the like, and is lightweight. In addition, although the linear polyorganosiloxane resin is applied to various industrial fields due to various advantages such as excellent curing, chemical stability, etc., the linear polyorganosiloxane resin is known to be decomposed in the course of forming a volatile ring-shaped cyclotrisiloxane at temperatures of ≥ 250°C or more, and thus limiting applicability as a substrate material.

To solve these problems, various attempts have been made to increase thermal stability of silicone resins. For example, JP2005-298606 discloses a silicone resin having improved heat resistance prepared by reacting 1,3,5,7-tetramethylcyclotetrasiloxane with 1,3,5,7-tetravinyl-1,3,5,7-tetramethylcyclotetrasiloxane. In addition, US 2009/0069525 discloses a silicone resin having improved heat resistance prepared by reacting 1,3,5,7-tetravinyl-1,3,5,7-tetramethylcyclotetrasiloxane with 1,4-bis(dimethylsilyl)benzene.

However, despite the advantage of increased heat resistance, these resins have disadvantages of reduced flexibility and brittleness. As the degree of cross-linking of a silicon matrix increases, the formation of cyclotrisiloxane can be inhibited. However, the silicone resins are changed from a rubbery phase to a glassy phase, thereby causing the aforementioned disadvantages.

Therefore, there is a need for novel materials which have outstanding properties in terms of heat resistance, flexibility, mechanical properties, and optical properties to be suited for display substrates.

### Summary of the Invention

The present invention provides a composite sheet, which has outstanding properties in term of heat resistance, thermal stability, flexibility, mechanical properties and optical properties to be suited for display substrates, and may be applied to smaller, thinner, lighter and cheaper display substrates.

In addition, the present invention provides a method for preparing the composite sheet, and a display substrate using the same.

The composite sheet of the present invention may suppress deformation of a ring structure and decomposition even at a high temperature of ≥ 350°C or more, thereby preventing failure of materials at high temperature in manufacture of a substrate.

One aspect of the invention relates to a composite sheet. The composite sheet includes a matrix, and a reinforcing material impregnated in the matrix. The composite sheet has a relaxation modulus of ≥ 1000 MPa or less under a load of 100 μN and a weight variation (ΔW) of ≥ 98% or more at ≥ 350°C according to Equation 1:

[Equation 1]

$$\Delta W = \frac{Wa}{Wb} \times 100$$

,

wherein Wa is a sample weight as measured after heating 50 mg of a sample from 25°C to 350°C at a temperature increasing rate of 5°C/min in a nitrogen atmosphere by thermogravimetric analysis (TGA/DSC1), and Wb is an initial weight of the sample at 25°C.

In one embodiment, the matrix may include a silicone resin containing a cyclic siloxane.

In another embodiment, the matrix may include a reaction product of a cyclic siloxane and a linear terminal vinyl group-containing polysiloxane.

The cyclic siloxane may be represented by Formula 1:

[Formula 1]

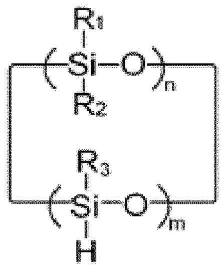

,

wherein $R_1$, $R_2$ and $R_3$ are each independently hydrogen, a substituted or unsubstituted C1-C5 alkyl group, or a substituted or unsubstituted C6-C12 aryl group; n and m are each an integer from 0 to 6; and n + m is an integer from 3 to 6.

The linear terminal vinyl group-containing polysiloxane may be represented by Formula 2:

[Formula 2]

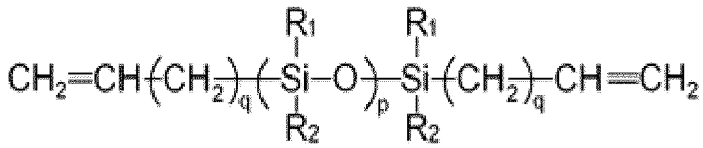

,

wherein $R_1$ and $R_2$ are each independently hydrogen, a substituted or unsubstituted C1-C5 alkyl group, or a substituted or unsubstituted C6-C12 aryl group; p is an integer from 1 to 20; and q is an integer from 0 to 20.

The cyclic siloxane and the linear terminal vinyl group-containing polysiloxane may be present in a mole-equivalent ratio of 0.5:1 to 2.5:1.

The composite sheet may have a weight variation (ΔW) of ≥ 98% or more at 350°C according to Equation 1:

$$\Delta W = \frac{Wa}{Wb} \times 100$$

,

wherein Wa is a sample weight as measured after heating 50 mg of a sample from 25°C to 350°C at a temperature increasing rate of 5°C /min in a nitrogen atmosphere by thermogravimetric analysis (TGA/DSC1), and Wb is an initial weight of the sample at 25°C.

The composite sheet may have a transmittance of ≥ 90% or more at a wavelength of 550 nm.

The composite sheet may have a bending resistance of ≤ 5 mm according to ASTM D522, and a coefficient of thermal expansion (CTE) of ≤ 10 ppm/K.

The reinforcing material may include at least one of glass fiber cloths, glass fabrics, non-woven glass fabrics, and glass meshes.

Another aspect of the invention relates to a method for preparing a composite sheet. The method includes: preparing a matrix composition including a cyclic siloxane and a linear terminal vinyl group-containing polysiloxane; and impregnating the matrix composition with a reinforcing material and then curing the same.

A further aspect of the present invention relates to a display substrate including the composite sheet.

## Brief Description of Drawings

Fig. 1 is a schematic sectional view of a composite sheet according to one embodiment of the invention.
Fig. 2 is a schematic diagram of a bond form of a cyclic siloxane and a linear terminal vinyl group-containing polysiloxane.

## Detailed description of the Invention

Fig. 1 is a schematic sectional view of a composite sheet according to one embodiment of the invention. Referring to Fig. 1, a composite sheet 10 according to one embodiment includes a matrix 1 which includes a reinforcing material 2. According to one embodiment, the reinforcing material 2 may have a laminated structure, but is not limited thereto. The reinforcing material may be impregnated in a matrix as a support. In another embodiment, the reinforcing material may be dispersed in the matrix. In another embodiment, the reinforcing material may have a woven structure and may be impregnated in a matrix. In another embodiment, the reinforcing material may be arranged with a unidirection and may be impregnated in a matrix. The reinforcing material may be in the form of a single-layer or a multi-layer.

In one embodiment, the matrix includes a silicone resin containing a cyclic siloxane.

In one embodiment, the matrix may include a reaction product of a cyclic siloxane and a linear terminal vinyl group-containing polysiloxane.

In one embodiment, a method for preparing the composite sheet may include: preparing a matrix composition including a cyclic siloxane and a linear terminal vinyl group-containing polysiloxane; and impregnating the matrix composition with a reinforcing material and then curing the same.

Fig. 2 is a schematic diagram of a bond form of a cyclic siloxane and a linear terminal vinyl group-containing polysiloxane. Hydrogen of the cyclic siloxane reacts with a vinyl group of the linear terminal vinyl group-containing polysiloxane, so that the linear terminal vinyl group-containing polysiloxane (B) is bonded between the cyclic siloxane moieties (A).

The cyclic siloxane may be represented by Formula 1:

[Formula 1]

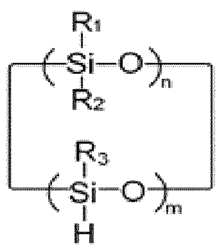

,

wherein $R_1$, $R_2$, and $R_3$ are each independently hydrogen, a substituted or unsubstituted C1-C5 alkyl group, or a substituted or unsubstituted C6-C12 aryl group; n and m are each an integer from 0 to 6; and n + m is an integer from 3 to 6.

In one embodiment, when m is 0, any one of $R_1$ and $R_2$ may be hydrogen.

As used herein, the term "substituted" means that at least one hydrogen atom is substituted with a halogen atom, a hydroxyl group, an amino group, a carbonyl group, a thiol group, an ester group, an ether group, a carboxyl group or a salt thereof, a sulfonate group or a salt thereof, a phosphate group or a salt thereof, a C1-C20 alkyl group, a C2-C20 alkenyl group, a C2-C20 alkynyl group, a C1-C20 alkoxy group, a C6-C30 aryl group, a C6-C30 aryloxy group, a C3-C30 cycloalkyl group, a C3-C30 cycloalkenyl group, a C3-C30 cycloalkenyl group, or a combination thereof.

Examples of the cyclic siloxane may include tetramethylcyclotetrasiloxane, tetraethylcyclotetrasiloxane, tetrapropylcyclotetrasiloxane, tetrabutylcyclotetrasiloxane, pentamethylcyclopentasiloxane, pentaethylcyclopentasiloxane, hexamethylcyclohexasiloxane and the like.

The linear terminal vinyl group-containing polysiloxane is a linear siloxane having vinyl groups at terminals thereof, and may contain the vinyl groups within a range that satisfies an equivalent ratio. For example, the vinyl groups may be present in an amount of ≥ 25 mol% to ≤ 50 mol% in the matrix. Within this range, high curing efficiency and rubbery properties after curing can be obtained.

In one embodiment, the linear terminal vinyl group-containing polysiloxane may be represented by Formula 2:

[Formula 2]

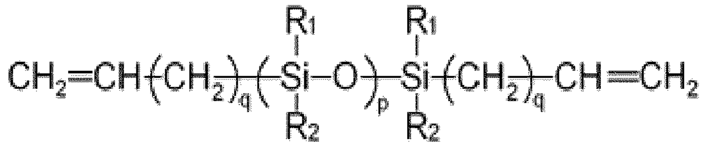

,

wherein $R_1$ and $R_2$ are each independently hydrogen, a substituted or unsubstituted C1-C5 alkyl group, or a substituted or unsubstituted C6-C12 aryl group; p is an integer from 1 to 20; and q is an integer from 0 to 20.

For example, DMS-V03, V05, V21 (vinyl-terminated polydimethylsiloxysilane, manufactured by Gelest, Inc.), and the like may be used as the linear terminal vinyl group-containing polysiloxane.

In one embodiment, the linear terminal vinyl group-containing polysiloxane may have a weight average molecular weight of ≥ 100 g/mol to ≤ 10,000 g/mol. Within this range, the matrix composition can exhibit outstanding properties in terms of thermal stability, transparency, and bending resistance. Preferably, the linear terminal vinyl group-containing polysiloxane has a weight average molecular weight from ≥ 200 g/mol to ≤ 5,000 g/mol, more preferably from ≥ 300 g/mol to ≤ 1,000 g/mol, and still more preferably from ≥ 350 g/mol to ≤ 700 g/mol. The weight average molecular weight can be measured by GPC (gel permeation chromatography).

According to embodiments, the mechanical properties of the composite sheet may be controlled by controlling the weight average molecular weight of the linear terminal vinyl group-containing polysiloxane.

In one embodiment, the cyclic siloxane and the linear terminal vinyl group-containing polysiloxane may be present in a mole-equivalent ratio of , 0.5:1 to ,2.5:1. Within this range of the mole-equivalent ratio, the matrix composition has high curing efficiency. Preferably, the cyclic siloxane and the linear terminal vinyl group-containing polysiloxane are present in a mole-equivalent ratio of ,1.0:1 to ,2.0:1. The mole-equivalent ratio is a mole ratio of the Si-H group in the cyclic siloxane to the vinyl groups.

The matrix composition may further include typical additives such as catalysts, inhibitors, etc..

The reinforcing material may include at least one of glass fiber cloths, glass fabrics, non-woven glass fabrics, and glass meshes. Preferably, the reinforcing material includes glass fiber cloths.

A difference in index of refraction between the reinforcing material and the matrix may be ≤ 0.01 or less. Within this range, the matrix composition can exhibit excellent transparency. Preferably, the difference in index of refraction there between is ≥ 0.0001 to ≤ 0.007.

A method for preparing a composite sheet may include: impregnating the matrix composition with the reinforcing material; placing the matrix composition between release films, and laminating the same, and curing the matrix composition.

A composite sheet according to embodiments may include the matrix composition and the reinforcing material in a weight ratio of ,70:30 to ,95:5, preferably from ,80:20 to ,90:10. Within this range, the composite sheet may have properties suited for a display substrate.

As used herein, the term "impregnate" and derivatives thereof may include forming a single layer or multilayer structure of the reinforcing material in the matrix.

Curing may be performed at a temperature from ≥ 40°C to ≤ 120°C, preferably, from ≥ 50°C to ≤ 100°C, for ≥ 0.1 minutes to ≤ 10 hours, preferably, for ≥ 30 minutes to ≤ 5 hours. Within this range, sufficient curing of the matrix and the reinforcing material can be secured while providing high mechanical strength.

A composite sheet according to embodiments may have a thickness of ≥ 15 μm to ≤ 200 μm. Within this range, the composite sheet can be used for display substrates.

In one embodiment, the matrix composition may have a glass transition temperature from ≥ -40°C to ≤ -20°C. In this case, within a temperature range from room temperature to 80°C, that is, within the operation temperature range when used for a display substrate, the composite sheet has excellent flexibility and stiffness, as well as a low coefficient of thermal expansion.

The composite sheet may have a weight change (ΔW) of ≥ 98% or more at 350°C, for example, from ≥ 98.5% to ≤ 99.9% according to Equation 1:

[Equation 1]

$$\triangle W = \frac{Wa}{Wb} \times 100$$
,

wherein Wa is a sample weight, as measured after heating 50 mg of a sample from 25°C to 350°C at a temperature increasing rate of 5°C/min in a nitrogen atmosphere by thermogravimetric analysis (TGA/DSC1), and Wb is an initial weight of the sample at 25°C.

The composite sheet may have a relaxation modulus of ≤ 1000 MPa or less, for example, ≥ 10 MPa to ≤ 200 MPa, in an embodiment, ≥ 20 Mpa to ≤ 150 MPa, under a load of 100 $\mu$N. In one embodiment, the composite sheet may have relaxation modulus of ≥ 20 Mpa to ≤ 100 MPa.

The composite sheet may have a transmittance of ≥ 90% or more, preferably ≥ 90% to ≤ 99%, at a wavelength of 550 nm.

The composite may have a bending resistance of ≤ 5 mm, for example, from ≥ 0.1 mm to ≤ 3.5 mm, according to ASTM D522, and a coefficient of thermal expansion (CTE) of ≤ 10 ppm/K, for example, from ≥ 0.1 to ≤ 5 ppm/K.

In another embodiment, the composite sheet may further include a smoothing layer, a gas barrier layer and the like on at least one side thereof. A process of forming these layers can be readily performed by those skilled in the art.

Another aspect of the invention relates to a display substrate including the composite sheet. The display substrate may be used as a substrate for display and optical devices, such as liquid crystal display devices (LCDs), color filters, organic EL display devices, solar cells, touch screen panels, etc.

Now, the present invention will be described in more detail with reference to some examples. However, it should be noted that these examples are provided for illustration only and are not to be construed in any way as limiting the present invention.

Descriptions of details apparent to those skilled in the art will be omitted for clarity.

## EXAMPLES

### Example 1

Tetramethylcyclotetrasiloxane and a linear vinyl-terminal polyorganosiloxane DMS-V03 (MW 500, DP 5, Gelest Inc.) were blended in an equivalent ratio of 2:1 and sufficiently mixed using a vortex mixer. After impregnating the mixture with D-glass based glass fibers (Product 3313, Nittobo Co. Ltd.), the impregnated glass fibers were placed on a release glass substrate and left at room temperature for 24 hours until the viscosity was increased. Then, with an upper surface of the impregnated glass fibers covered with a glass substrate, the remaining resin was removed from the glass fibers using a laminator, followed by heat curing in an oven at 100°C for 4 hours, thereby producing a transparent silicone composite sheet.

### Example 2

A silicon composite sheet was prepared in the same manner as in Example 1 except that DMS-05 (MW 800, DP 9, Gelest Inc.) was used as the vinyl-terminal polyorganosiloxane instead of DMS-V03.

### Example 3

A silicon composite sheet was prepared in the same manner as in Example 1 except that DMS-V21 (MW 6000, DP 65, Gelest Inc.) was used as the vinyl-terminal polyorganosiloxane instead of DMS-V03.

### Comparative Example 1

After blending part A and part B of Sylgard 184, which is a polyorganosiloxane manufactured by Dow Coming Co., in a weight ratio of 1:10, the mixture was sufficiently mixed using a vortex mixer. After impregnating the mixture with E-glass based glass fibers (Product name 3313, Nittobo Co. Ltd.), the impregnated glass fibers were placed between two release glass substrates. Then, remaining resin was removed from the glass fibers using a laminator, followed by heat curing in an oven at 100°C for 4 hours, thereby producing a transparent silicone composite sheet.

**Comparative Example 2**

A silicon composite sheet was prepared in the same manner as in Example 1 except that tetravinyltetramethylcyclotetrasiloxane was used as the vinyl-terminal polyorganosiloxane.

The composite sheets prepared in Examples and the Comparative Examples were evaluated as to the following properties, and results are shown in Table 1.

Property Evaluation

Thermal stability: After loading 50 mg of a sample in a thermogravimetric analysis tester TGA/DSC1 (Mettler Toledo Inc.), weight loss of the sample was measured by heating the sample from 25°C to 350°C at a temperature increasing rate of 5°C /min in a nitrogen atmosphere. An initial weight and each weight of the sample at 250°C, 300°C and 350°C were measured, and a weight change (ΔW) of the sample was calculated according to Equation 1:

[Equation 1]

$$\Delta W = \frac{Wa}{Wb} \times 100$$

,

wherein Wa is a sample weight, as measured after heating 50 mg of a sample from 25°C to 350°C at a temperature increasing rate of 5°C/min in a nitrogen atmosphere using a thermogravimetric analyzer TGA/DSC1, and Wb is an initial weight of the sample at 25□.

(2) Relaxation modulus: Relaxation modulus was measured using a Triboindentor (Hysitron Co.) in a 100 μN force-control mode at room temperature (unit: MPa).

(3) Transmittance (%): Transmittance was measured using a UV-Vis spectrometer V-550 (JASCO Instrument) at a wavelength of 550 nm.

(4) Bending resistance (mm): After winding the composite sheet cut into a width of 1 cm around an SUSS cylinder having a diameter of 0.5 mm to 10 mm and applying a force of 1 kg for 1 minute to the composite sheet according to ASTM D522, bending resistance was measured by observing damage to the composite sheet using a microscope.

(5) CTE (ppm/K): CTE was measured using a thermomechanical analyzer model Q400 (TA Instruments Inc.) in a tensile mode while heating the sample from -10°C to 300°C at a temperature increasing rate of 5°C/min..

**Table 1**

| | TGA result | | | Modulus [MPa] | Transmittance | Bending resistance | CTE |
|---|---|---|---|---|---|---|---|
| | ΔW% at 250°C | ΔW% at 300°C | ΔW% at 350°C | | | | |
| Example 1 | 99.70 | 99.70 | 99.67 | 86 | 90% | 3.0 mm | 5 |
| Example 2 | 99.53 | 99.20 | ,98.69 | 68 | 90% | 3.0 mm | 5 |
| Example 3 | 99.29 | 99.01 | ,98.68 | 23 | 90% | 3.0 mm | 5 |
| Comparative Example 1 | 99.49 | ,98.93 | 97.92 | 803 | 44% | 10.0 mm | 5 |
| Comparative Example 2 | 99.82 | 99.80 | 99.75 | 7300 | 85% | 15.0 mm | 13 |

As shown in Table 1, it can be seen that the composite sheets prepared in Examples 1 to 3 exhibited outstanding properties in terms of thermal stability, transmittance, bending resistance and coefficient of thermal expansion. On the contrary, it can be seen that the composite sheet of Comparative Example 1 had insufficient properties in terms of thermal stability, transmittance and bending resistance as compared with the composite sheets of Examples 1 to 3. Further, it can be seen that the composite sheet prepared in Comparative Example 2 had good thermal stability, but exhibited insufficient properties in terms of transmittance, bending resistance and coefficient of thermal expansion as

compared with the composite sheets of Examples 1 to 3. Particularly, it can be seen that the composite sheet prepared in Comparative example 2 had a high coefficient of thermal expansion and thus was not suitable for a display substrate.

Although some embodiments have been described, it will be apparent to those skilled in the art that these embodiments are given by way of illustration only, and that various modifications, changes, alterations, and equivalent embodiments can be made without departing from the spirit and scope of the invention. The scope of the invention should be limited only by the accompanying claims and equivalents thereof.

## Claims

1. A composite sheet comprising: a matrix and a reinforcing material impregnated in the matrix, the composite sheet having a relaxation modulus of 1000 MPa or less under a load of 100 μN and a weight variation (ΔW) of ≥ 98% or more at 350°C according to Equation 1:

[Equation 1]

$$\Delta W = \frac{Wa}{Wb} \times 100$$,

wherein Wa is sample weight as measured after heating 50 mg a sample from 25°C to 350°C at a temperature increasing rate of 5°C/min in a nitrogen atmosphere by thermogravimetric analysis (TGA/DSC1), and Wb is an initial weight of the sample at 25°C.

2. The composite sheet according to claim 1, wherein the matrix comprises a silicone resin comprising a cyclic siloxane.

3. The composite sheet according to claim 1 or 2, wherein the matrix comprises a reaction product of a cyclic siloxane and a linear terminal vinyl group-containing polysiloxane.

4. The composite sheet according to claims 1 to 3, wherein the cyclic siloxane comprises a compound represented by Formula 1:

[Formula 1]

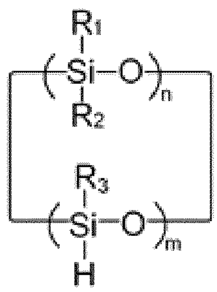

,

wherein $R_1$, $R_2$ and $R_3$ are each independently hydrogen, a substituted or unsubstituted C1-C5 alkyl group, or a substituted or unsubstituted C6-C12 aryl group; n and m are each an integer from 0 to 6; and n + m is an integer from 3 to 6.

5. The composite sheet according to claims 1 to 4, wherein the linear terminal vinyl group-containing polysiloxane comprises a compound represented by Formula 2:

[Formula 2]

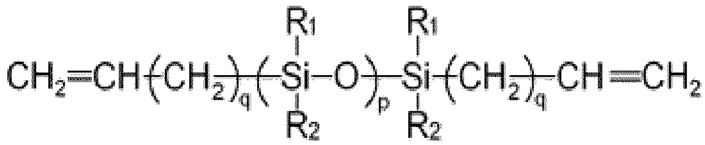

,

wherein $R_1$ and $R_2$ are each independently hydrogen, a substituted or unsubstituted C1-C5 alkyl group, or a substituted or unsubstituted C6-C12 aryl group; p is an integer from 1 to 20; and q is an integer from 0 to 20.

**6.** The composite sheet according to claims 1 to 5, wherein the cyclic siloxane and the linear terminal vinyl group-containing polysiloxane are present in a mole-equivalent ratio of 0.5:1 1 to 2.5:1.

**7.** The composite sheet according to claims 1 to 6, having a transmittance of 90% or more at a wavelength of 550 nm.

**8.** The composite sheet according to claims 1 to 7, having a bending resistance of less than 5 mm according to ASTM D522, and a coefficient of thermal expansion (CTE) of less than 10 ppm/K.

**9.** The composite sheet according to claims 1 to 8, wherein the reinforcing material comprises at least one of glass fiber cloths, glass fabrics, non-woven glass fabrics, and glass meshes.

**10.** A method for preparing a composite sheet according to claims 1 to 9, comprising:

preparing a matrix composition comprising a cyclic siloxane and a linear terminal vinyl group-containing polysiloxane; and
impregnating the matrix composition with a reinforcing material, followed by curing.

**11.** The method according to claim 10, wherein the cyclic siloxane comprises a compound represented by Formula 1:

[Formula 1]

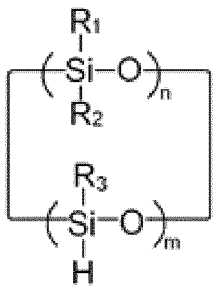

,

wherein $R_1$, $R_2$ and $R_3$ are each independently hydrogen, a substituted or unsubstituted C1-C5 alkyl group, or a substituted or unsubstituted C6-C12 aryl group; n and m are each an integer from 0 to 6; and n + m is an integer from 3 to 6.

**12.** The method according to claim 10 or 11, wherein the linear terminal vinyl group-containing polysiloxane comprises a compound represented by Formula 2:

[Formula 2]

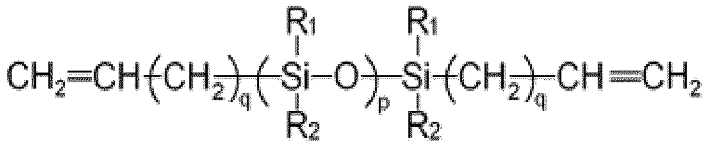

,

wherein $R_1$ and $R_2$ are each independently hydrogen, a substituted or unsubstituted C1-C5 alkyl group, or a substituted or unsubstituted C6-C12 aryl group; p is an integer from 1 to 20; and q is an integer from 0 to 20.

**13.** The method according to claims 10 to 12, wherein the cyclic siloxane and the linear terminal vinyl group-containing polysiloxane are present in a mole-equivalent ratio of 0.5:1 to 2.5:1.

**14.** A display substrate comprising the composite sheet according to claims 1 to 9.

Fig. 1.

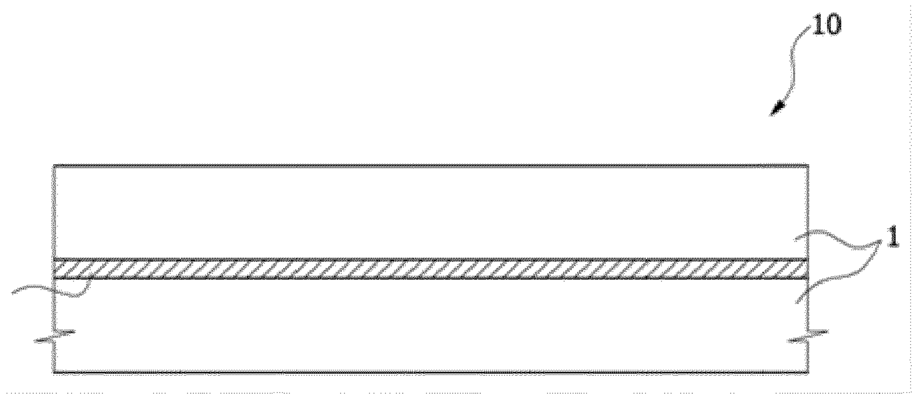


Fig. 2.

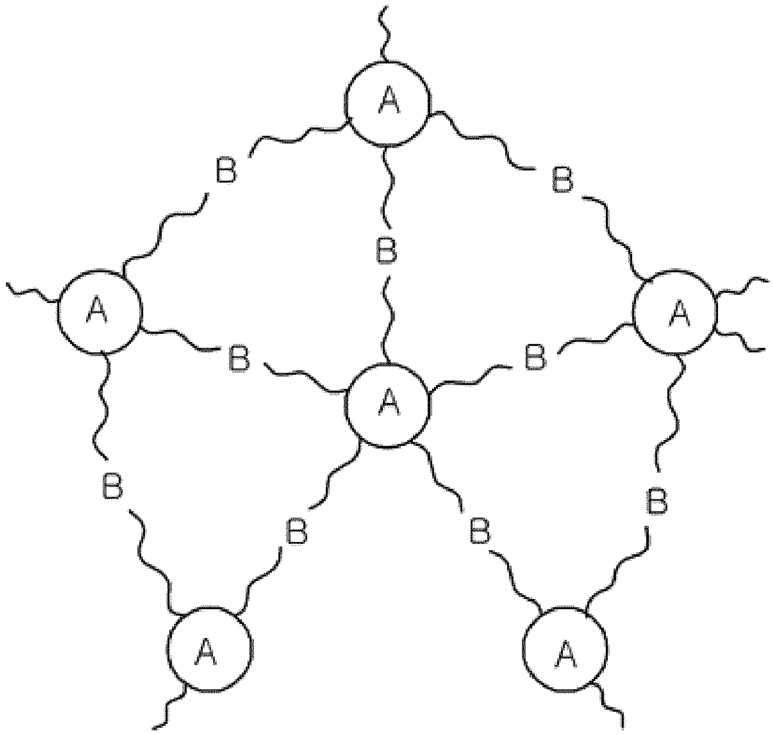

Europäisches Patentamt
European Patent Office
Office européen des brevets

# EUROPEAN SEARCH REPORT

Application Number
EP 13 17 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/051548 A1 (BAILEY DEBBIE [US] ET AL) 28 February 2008 (2008-02-28)<br>* paragraphs [0005] - [0010] *<br>* paragraphs [0017] - [0029] *<br>* paragraphs [0031] - [0033], [0037] *<br>* paragraph [0062] *<br>* paragraphs [0170] - [0193] *<br>----- | 1-14 | INV.<br>C08J5/24<br><br>ADD.<br>C08L83/04<br>C08L83/14<br>C08G77/50<br>C08G77/20<br>C08G77/12 |
| | | | TECHNICAL FIELDS SEARCHED (IPC) |
| | | | C08J<br>C08L<br>C08G |

The present search report has been drawn up for all claims

1

| Place of search | Date of completion of the search | Examiner |
|---|---|---|
| The Hague | 4 September 2013 | Lichau, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 1396

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2013

| Patent document cited in search report | Publication date | Patent family member(s) | Publication date |
|---|---|---|---|
| US 2008051548 A1 | 28-02-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005298606 A
- US 20090069525 A